# EUROPEAN PATENT APPLICATION

(11) **EP 1 995 981 A1**
(43) Date of publication of application: **26.11.2008**
(21) Application number: 07715178.5
(22) Date of filing: 02.03.2007
(51) Int. Cl.: H04Q 7/22

(54) **BASE STATION AND HANDOVER CONTROL METHOD**

(30) Priority: 03.03.2006 JP 2006057979
(71) Applicant: NTT DoCoMo, Inc., Chiyoda-ku Tokyo 100-6150 (JP)
(72) Inventor: MOTEGI, Masayuki, Chiyoda-ku, Tokyo 1006150 (JP); KATO, Yasuhiro, Chiyoda-ku, Tokyo 1006150 (JP); HAPSARI, Wuri Andarmawanti, Chiyoda-ku, Tokyo 1006150 (JP); NAKAMURA, Takehiro, Chiyoda-ku, Tokyo 1006150 (JP)
(74) Representative: HOFFMANN EITLE
(86) International application number: PCT/JP2007/054097
(87) International publication number: WO 2007/100108

(57) **Abstract**

A base station is provided with data storing means configured to store data addressed to a mobile station transmitted from a transfer route control apparatus, and data transfer means configured to transfer the data addressed to the mobile station to a handover destination base station according to a request of the data addressed to the mobile station from the handover destination base station, wherein, when the base station receives a handover confirm complete report for reporting handover completion from the handover destination base station, the data storing means ends storing the data addressed to the mobile station, so that the object is achieved.

## Description

### TECHNICAL FIELD

The present invention generally relates to a handover control technique for providing lossless handover when a mobile station performs handover. More particularly, the present invention relates to a base station and a handover control method when the mobile station enters a tunnel and the like and handover fails.

### BACKGROUND ART

In a system to which IMT - 2000 (International Mobile Telecommunication - 2000) is adopted, when a mobile station (UE: User Equipment) moves and handover for going across radio network control apparatuses (RNC: Radio Network Controller) is performed, a procedure called "SRNS Relocation" is performed.

The "SRNS Relocation" procedure includes functions for exchanging a transmission sequence number and a reception sequence number between UE and RNC, checking statuses of the transmission side and the reception side, determining a transmission start sequence number, and transferring PDCP PDU (protocol data unit) from a source RNC to a target RNC using packet data convergence protocol (PDCP) that is terminated between UE and RNC. At this time, the source RNC does not locally buffer the PDCP PDU which the source RNC starts to transfer to the target RNC.

### DISCLOSURE OF THE INVENTION

### PROBLEM TO BE SOLVED BY THE INVENTION

However, in the above-mentioned background art, there are following problems.

In the system to which IMT-2000 is adopted, recovery procedure when handover fails due to circumstances, for example, retransmission of PDCP PDU is not concretely described.

In an actual environment, when a mobile station enters an area such as a tunnel and the like where radio wave does not reach while the mobile station is moving, some cases in which the handover procedure fails can be considered due to reception error of a handover command (HO command) from the source NB (sNB) (handover source base station) e.g. a resource block reconfiguration (RB reconfiguration) message, transmission error of handover command complete (HO Command Complete) to the target NB (tNB) (handover destination base station) e.g. a resource block reconfiguration complete (RB reconfiguration Complete), or reception error of HO command complete at the target NB and the like.

In those cases, UE performs cell search, transmits a handover request to a target NB from which radio wave can be received so as to perform error avoidance procedure. In this case, the target NB may be different from a target NB of original handover. Also, the target NB may be the same as the target NB of original handover.

In this procedure, the target NB sends a transfer request of context to the source NB. In the SRNS Relocation in the system to which IMT-2000 is applied, since the source NB does not store the user data packet for which transfer has been completed, data loss occurs when handover is performed in reconnection, and there is a fear in that a problem of decrease of throughput in upper layer e.g. transport layer (TCP: Transmission Control Protocol layer) may occur.

The present invention is contrived in view of the above-mentioned problem, and the object is to provide a base station and a handover control method that can realize lossless handover even though handover is failed.

### MEANS FOR SOLVING THE PROBLEM

For solving the problem, as one of features, the base station of the present invention includes:
data storing means configured to store data addressed to a mobile station transmitted from a transfer route control apparatus;
data transfer means configured to transfer the data addressed to the mobile station to a handover destination base station according to a request of the data addressed to the mobile station from the handover destination base station,
wherein, when the base station receives a handover confirm complete report for reporting handover completion from the handover destination base station, the data storing means ends storing the data addressed to the mobile station.

By configuring like this, the handover source base station stores user data addressed to the mobile station so as to be able to transfer the user data to the handover destination base station until handover completes at the handover destination base station.

In addition, as one of features, the handover control method includes:
a data storing step in which a handover source base station stores data addressed to a mobile station transmitted from a transfer route control apparatus;
a data transfer step in which the handover source base station transfers the data addressed to the mobile station to a handover destination base station according to a request of the data addressed to the mobile station by the handover destination base station;
a handover confirm complete report reception step in which the handover source base station receives, from the handover destination base station, a handover confirm complete report for reporting handover completion; and
a data storing end step in which the handover source base station ends storing the data addressed to the mobile station according to the reception of the handover confirm complete report.

By configuring like this, the handover source base station stores user data addressed to the mobile station so as to be able to transfer the user data to the handover destination base station until handover completes at the handover destination base station.

### EFFECT OF THE INVENTION

According to an embodiment of the present invention, a base station and a handover control method that can realize lossless handover even when handover fails can be realized.

### BRIEF DESCRIPTION OF THE DRAWINGS

Fig.1 is a schematic diagram showing a radio access network of an embodiment of the present invention;
Fig.2 is a block diagram showing a base station of an embodiment of the present invention;
Fig.3 is a flow diagram showing operation of the radio access network of an embodiment of the present invention;
Fig.4 is a flow diagram showing operation of a source base station of an embodiment of the present invention;
Fig.5 is a flow diagram showing operation of a target base station of an embodiment of the present invention; and
Fig.6 is a flow diagram showing operation of a radio access network of an embodiment of the present invention.

### Description of reference signs

100 radio access network
200 core network
300, 300₁, 300₂, 300₃ access gateway (aGW)
400, 400₁, 400₂, 400₃ base station (eNB: eNode B)
500 mobile station (UE: User Equipment)

### PREFERRED EMBODIMENTS FOR CARRYING OUT THE INVENTION

In the following, embodiments of the present invention are described with reference to figures.

By the way, in all figures for explaining the embodiments, parts having the same function are assigned the same reference symbols and repeated descriptions are not given.

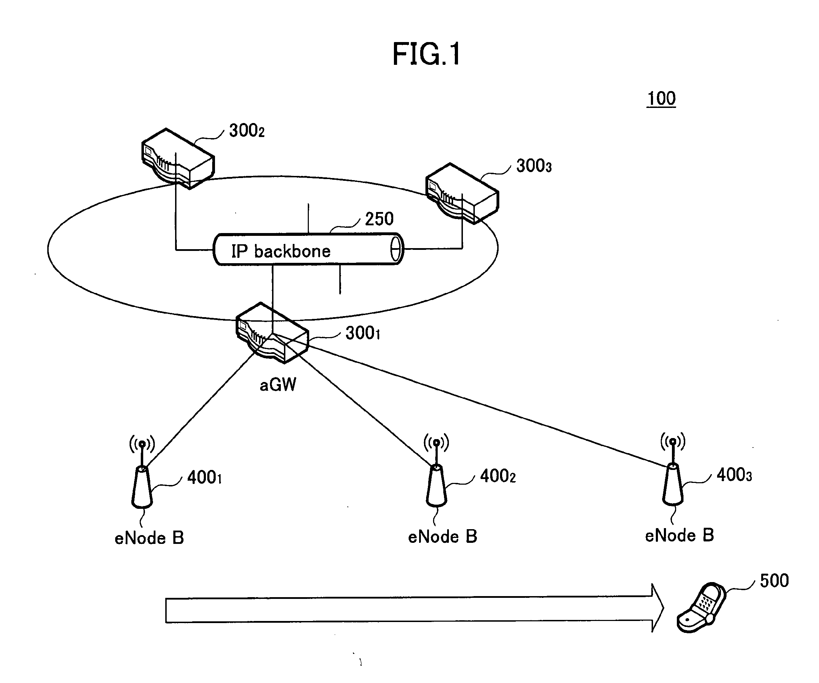

A radio access network of an embodiment of the present invention is described with reference to Fig.1.

In the present embodiment, a case is described as an example in which the system is applied to E-UTRA (Evolved-UMTS Terrestrial Radio Access) and E-UTRAN (Evolved-UMTS Terrestrial Radio Access Network) that are being standardized in 3GPP.

The radio access network 100 of the present embodiment includes a core network 200, access gateways (aGW: Access Gateway) 300 (300₁, 300₂, 300₃) as transfer route control apparatuses that function as gateways between the core network 200 and the radio access network, a plurality of base stations (eNodeB) 400 (400₁, 400₂, 400₃) connected under the access gateway 300, and a mobile station (UE) 500.

The core network 200 includes an IP backbone 250, for example.

The access gateway 300 is a node integrating at least a part of functions of a gateway GPRS support node (GGSN) and RNC in the IMT-2000. Therefore, the access gateway 300 is a node including a function of the core network 200 and a function of the RNC.

The base station 400 is a node integrating at least a part of functions of the RNC and NB (Node B) in IMT-2000 aiming dramatic decrease of connection time and decrease of latency. The NB is provided with MAC (Media Access Control) protocol, RLC (Radio Link Control) protocol and the like as functions of U plane, and with RRC (Radio Resource Control) protocol as a function of C plane.

In this embodiment, although E-UTRAN is described as an example of radio access network, the radio access network is not limited to this, and it may be other system architecture configuration.

The NB is provided with a function to be able to forward, to a target NB, user data buffered when the mobile station 500 performs handover by Outer ARQ function unit of a source NB e.g. outer ARQ SDU (service data unit) that is unsent data and unacknowledged data. In addition, a transmission route for forwarding data is established. The transmission route may be a wireless line or a cable line, and is not limited to the wireless line or the cable line.

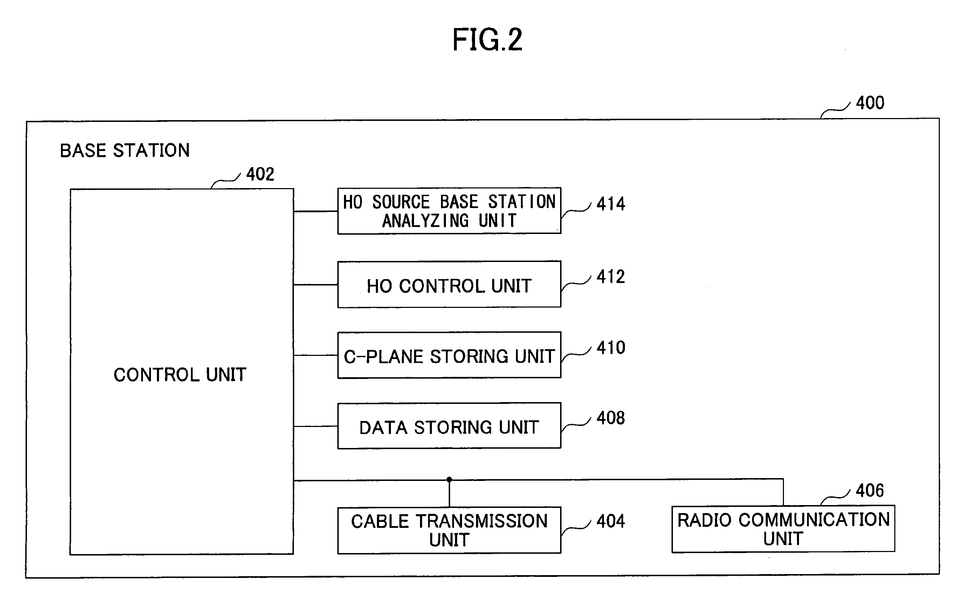

Next, the base station 400 of the present embodiment is described with reference to Fig.2.

The base station 400 of the present embodiment includes a control unit 402 as data transfer means and data request means, a cable transmission unit 404, a radio transmission unit 406, a data storing unit 408, a C-plane storing unit 410, a HO source base station analyzing unit 414 and a HO control unit 412 as transfer route change request means that are connected to the control unit 402.

The control unit 402 performs control for each function entity provided in the Node B to control the whole operation of the Node B. Detailed functions are described later.

The cable transmission unit 404 transfers user data transmitted from the access gateway 300 to the data storing unit 408. In addition, the cable transmission unit 404 transmits and receives control signals for handover via an interface between base stations. In addition, the cable transmission unit 404 transfers user data stored in the data storing unit 408 via the interface between base stations.

The radio transmission unit 406 transmits and receives control signals for handover transmitted from the mobile station 500.

The data storing unit 408 stores user data transmitted from the access gateway 300. In addition, the data storing unit 408 discards stored user data when handover completes or a time predetermined by a timer elapses.

The C-plane storing unit 410 stores control information necessary for setting of U-plane.

The HO control unit 412 recognizes information indicating handover completion transmitted from the mobile station 500 so as to request the access gateway 300 to change transfer route based on the information. In addition, the HO control unit 412 sends, to the base station of the source of handover, a handover confirmation completion report for reporting completion of handover.

The HO source base station analyzing unit 414 analyzes a handover request that is received from the mobile station 500 via the radio transmission unit 406 to obtain an address, for example, IP address on the network of the handover source base station from an ID indicating the handover source base station included in the handover request.

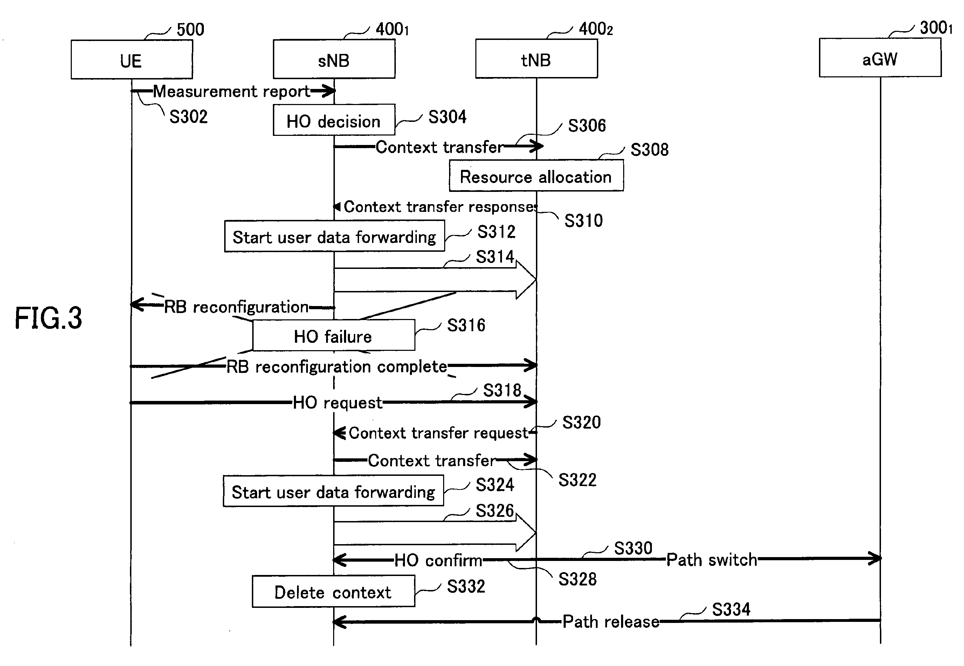

Next, a handover sequence in the radio access network 100 of the present embodiment is described with reference to Fig.3.

In this embodiment, a case is described in which the mobile station 500 performs handover from a source base station 400₁ connected under the access gateway 300₁ to a target base station 400₂.

The mobile station 500 reports, to the source base station 400₁, a measurement report storing information indicating communication quality of base stations that are candidates of handover destination such that the source base station 400₁ can select a proper handover destination base station (step S302).

The source base station 400₁ selects (HO decision) a proper target base station for which resource unoccupied state is checked based on the measurement report from the mobile station 500 (step S304). For example, the base station 400₂ is selected as a target base station.

Next, the source base station 400₁ transfers (context transfer) context that is information related to C-plane, for example, to the base station 400₂ (step S306).

Next, the base station 400₂ allocates resources (resource allocation) based on QoS (Quality of Service) information included in the context transferred from the source base station 400₁. In addition, the target base station 400₂ reserves the allocated resources (step S308).

Next, when reservation of necessary resources succeeds, the base station 400₂ reports a context transfer response indicating that preparation for handover is completed to the source base station 400₁ (step S310).

When the necessary resources cannot be reserved, the base station 400₂ reports that resources cannot be reserved for the mobile station 500 to the source base station 400₁.

When receiving the context transfer response, the source base station 400₁ determines the base station 400₂ as the handover destination base station that is the target base station.

On the other hand, when the source base station 400₁ is notified that resources for the mobile station 500 cannot be reserved, the source base station 400₁ selects another proper target base station for which resource available state is checked based on the measurement report from the mobile station 500. That is, operation similar to that in step S304 is performed.

Next, the source base station 400₁ starts forwarding, to the target base station 400₂, user data that should be forwarded to the mobile station 500 for which ACK (Acknowledge) is not received from the mobile station 500, and user data that is received from the access gateway 300₁ and that is not yet transmitted to the mobile station 500 (steps S312, S314).

The source base station 400₁ reports, to the mobile station 500, cell specific information necessary for reestablishing a radio line between the mobile station 500 and the target base station 400₂ (resource block (RB) reconfiguration).

The mobile station 500 establishes radio synchronization with the target base station 400₂ so as to establish a radio channel. After setting the radio channel between the mobile station 500 and the target base station 400₂, the mobile station 500 reports a handover complete command (RB Reconfiguration complete) indicating that handover completes to the target base station 400₂.

However, handover does not complete successfully when the mobile station goes into a tunnel and the like, and the electric field becomes weak so that the connection to the source base station 400₁ is disconnected, or, when transmission of handover complete command (RB Reconfiguration complete) to the target base station 400₂ fails (HO failure) (step S316).

In such a case, after the connection with the source base station 400₁ is lost, the mobile station 500 autonomously launches handover error recovery procedure using cell search and the like. The mobile station 500 sends a handover request (HO request) to a base station having the best communication quality as a result of the cell search (step S318). For example, the mobile station 500 sends a handover request to the base station 400₂.

The handover request includes identification information such as an ID of the source base station 400₁ that disconnected the connection, RNTI (Radio Network Temporary Identifier) used in the source base station 400₁ and the like. The RNTI is a temporary identifier for identifying a user.

Next, after receiving the handover request, the base station 400₂ analyzes the address e.g. IP address of the source base station 400₁ from the ID of the source base station 400₁ included in the handover request to establish a (security) tunnel for transmitting context. By doing that, even when a security tunnel with the source base station 400₁ is not established, the base station that receives the handover request can establish the security tunnel. Thus, the base station that receives the handover request can communicate data between the base station and the source base station 400₁ safely.

Next, when the base station 400₂ receives the handover request, the base station 400₂ sends a context transfer request to the source base station 400₁ (step S320).

Next, the source base station 400₁ copies context and user data for the mobile station 500 and sends them to the target base station 400₂ (step S322, step S324, step S326). The source base station 400₁ stores these pieces of data until receiving the handover confirm complete report, from the handover destination base station, for reporting that handover completes.

The target base station 400₂ receives the context transmitted from the source base station 400₁. In addition, when handover completes, the target base station 400₂ transmits the handover confirm complete report (HP confirm) for reporting completion of handover to the source base station 400₁ (step S328).

The source base station 400₁ that receives the handover confirm complete report ends storing data addressed to the mobile station so as to discard the copied context (step S332).

Next, the target base station 400₂ transmits, to the access gateway 300₁, a request (Path switch) for switching a path from the access gateway 300₁ set in the source base station 400₁ to the target base station 400₂ (step S330).

The access gateway 300₁ that receives the Path switch reports path release to the source base station 400₁ (step S334).

As mentioned above, the source base station 400₁ copies original context, transfers the copy to the target base station 400₂, and discards the original context after receiving the handover confirm complete report from the target base station 400₂. By doing the procedure, since the original context can be held until receiving the handover confirm complete report from the target base station 400₂, loss-less handover can be realized even when the mobile station 500 moves into a tunnel so that handover does not complete successfully, for example.

Next, operation of the base station 400 in the radio access network 100 of the present embodiment is described.

In the present embodiment, operation is described for the source base station and the target base station.

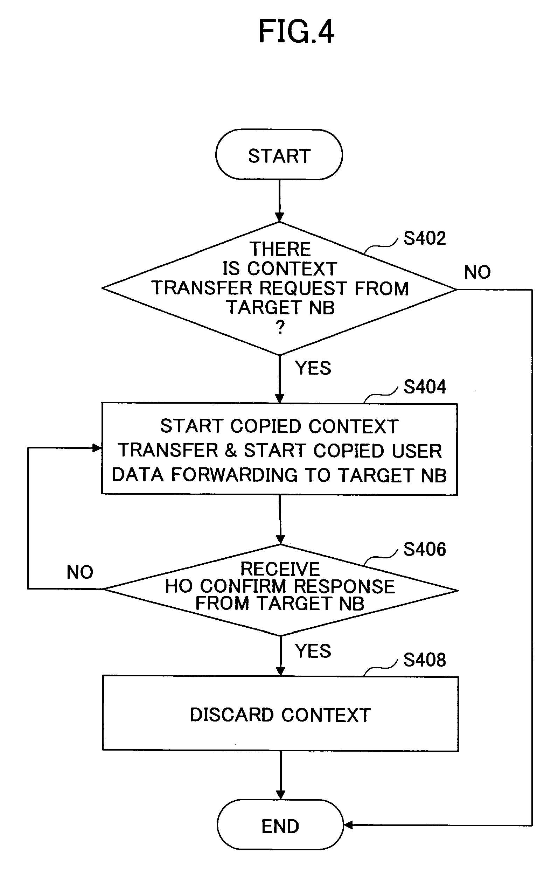

Operation of the source base station is described with reference to Fig.4.

User data addressed to the mobile station transmitted from the access gateway 300 is stored in the data storing unit 408. In addition, control information necessary for setting U-plane is stored in the C-plane storing unit 410.

The control unit 402 determines whether there is a transfer request of context, for example, C-plane control information and user data from the target base station 400₂ (step 402). The transfer request of the context is received via the cable transmission unit 404.

When it is determined that there is no transfer request of the context from the target base station 400₂ (step S402:NO), the process ends.

On the other hand, when it is determined that there is the transfer request of the context from the target base station 400₂ (step S402:YES), the control unit 402 copies control information, stored in the C-plane storing unit 410, necessary for setting U-plane so as to start forwarding the copy. In addition, the control unit 402 copies the user data stored in the data storing unit 408 to start forwarding the copy (step S404). As a result, copied control information necessary for setting U-plane and copied user data are forwarded to the target base station 400₂ instead of original control information necessary for setting U-plane and original user data

Next, the control unit 402 determines whether the handover confirm complete report is received from the target base station 400₂ (step S406). The handover confirm complete report is received via the cable transmission unit 404.

When the handover confirm complete report is not yet received (step S406:NO), the process returns to step S404.

On the other hand, when the handover confirm complete report is received (step S406:YES), the control unit 402 discards context, for example, discards control information necessary for setting U-plane stored in the C-plane storing unit 410 and user data stored in the data storing unit 408, wherein copies of the control information and the user data have been sent to the target base station 400₂ (step S408).

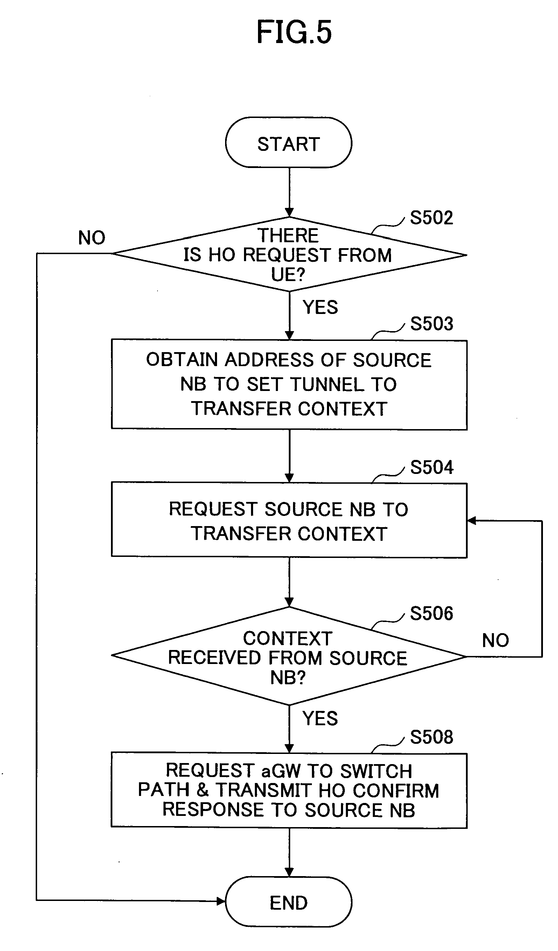

Operation of the target base station is described with reference to Fig.5.

After the connection between the mobile station 500 and the source base station 400₁ is lost, the mobile station 500 autonomously launches a handover error recovery procedure by cell search and the like. The mobile station 500 transmits a handover request to a base station, for example, the base station 400₂ by which the communication quality is the best as a result of the cell search.

The control unit 402 determines whether the handover request is received from the mobile station 500 (step S502). The handover request is received via the radio transmission unit 406.

When it is determined that the handover request is not yet received (step S502:NO), the process ends.

On the other hand, when it is determined that the handover request is received (step S502:YES), the HO source base station analyzing unit 414 obtains the address of the source base station from the ID of the source base station included in the handover request message to establish a tunnel for transferring context (step S503).

Next, the control unit 402 transmits a transfer request of the context to the source base station (step S504). The transfer request of the context is transmitted to the source base station via the cable transmission unit 402.

Next, the control unit 402 determines whether the context is received from the source base station (step S506).

When it is determined that the context is not yet received from the source base station (step S506:NO), the process returns to step S504.

On the other hand, when it is determined that the context is received from the source base station (step S506:YES), the HO control unit 412 transmits the handover confirm complete report to the source base station. In addition, the HO control unit 412 transmits a path switch request to the access gateway (step S508).

As described above, in the present embodiment, even though handover fails for some reasons, lossless handover can be realized by forwarding context from the handover destination base station.

In addition, since the handover source base station can hold the context until receiving the handover confirm complete report from the handover destination base station, even when entering a tunnel so that handover does not complete successfully, loss-less handover can be realized.

A radio access network according to another embodiment of the present invention is described.

The configuration of the radio access network of the present embodiment is similar to the configuration described with reference to Fig.1.

The base station 400 is a node integrating at least a part of functions of the RNC and NB (Node B) in IMT-2000 aiming dramatic decrease of connection time and decrease of latency. The NB is provided with MAC (Media Access Control) protocol, RLC (Radio Link Control) protocol, PDCP(Packet Data Convergence Protocol) and the like as functions of U plane, and with RRC (Radio Resource Control) protocol, S1-AP(S1-Application Part), X2-AP(X2-Application Part) and the like as functions of C plane.

The NB is provided with a function to be able to forward, to a target NB, user data buffered when the mobile station 500 performs handover by PDCP function unit of a source NB e.g. service data unit (SDU) that is unsent data and unacknowledged data. In addition, a transmission route for forwarding data is established. The transmission route may be a wireless line or a cable line, and is not limited to the wireless line or the cable line.

Configuration of the base station 400 of the present embodiment is similar to the configuration described with reference to Fig.2.

The HO control unit 412 recognizes information indicating handover complete transmitted from the mobile station 500, and transmits, to the access gateway 300, handover complete report for reporting that handover is completed in order to request the access gateway 300 to switch transfer route. In addition, the HO control unit 412 reports, to the handover source base station, that handover is completed using a resource release message.

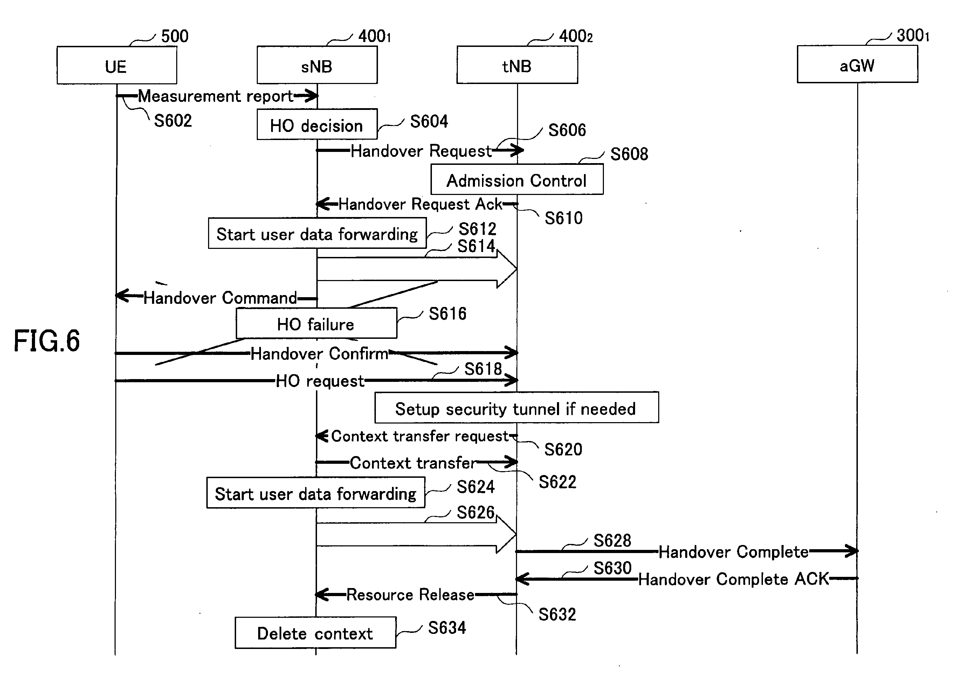

Next, a handover sequence in the radio access network 100 of the present embodiment is described with reference to Fig.6.

In this embodiment, a case is described in which the mobile station 500 performs handover from the source base station 400₁ connected under the access gateway 300₁ to the target base station 400₂.

The mobile station 500 reports, to the source base station 400₁, a measurement report storing information indicating communication quality of base stations that are candidates of handover destinations such that the source base station 400₁ can select a proper handover destination base station (step S602).

The source base station 400₁ selects (HO decision) a proper target base station for which resource unoccupied state is to be checked based on the measurement report from the base station 500 (step S604). For example, the base station 400₂ is selected as a target base station.

Next, the source base station 400₁ sends handover request to transfer context that is information related to C-plane, for example, to the base station 400₂ (step S606).

Next, the base station 400₂ allocates resources (Admission Control) based on QoS (Quality of Service) information included in the context transferred from the source base station 400₁. In addition, the target base station 400₂ reserves the allocated resources (step S608).

Next, when reservation of necessary resources succeeds, the base station 400₂ reports, to the source base station 400₁, handover request acknowledgment (Handover Request ACK), indicating that preparation for handover completes, including cell specific information necessary for resetting radio line (step S610).

When the necessary resources are not reserved, the base station 400₂ reports that resources cannot be reserved to the mobile station 500.

When receiving the handover request acknowledgment, the source base station 400₁ determines the base station 400₂ as the handover destination base station that is the target base station. On the other hand, when the source base station 400₁ is notified that resources from the base station 400₂ to the mobile station 500 cannot be reserved, the source base station 400₁ selects another proper target base station for which resource available state is checked based on the measurement report from the mobile station 500. That is, operation similar to that in step S604 is performed.

Next, the source base station 400₁ starts forwarding, to the target base station 400₂, user data that should be forwarded to the mobile station 500 for which ACK (Acknowledge) is not yet received from the mobile station 500, and user data that is received from the access gateway 300₁ and that is not yet transmitted to the mobile station 500 (start user data forwarding) (steps S612, S614).

The source base station 400₁ reports, to the mobile station 500, cell specific information necessary for reestablishing a radio line between the mobile station 500 and the target base station 400₂ (Handover Command).

The mobile station 500 establishes radio synchronization with the target base station 400₂ to establish a radio channel. After setting the radio channel to the target base station 400₂, the mobile station 500 reports a handover confirm command (Handover Confirm) indicating that handover completes to the target base station 400₂.

However, handover does not complete successfully when the mobile station 500 moves into a tunnel and the like so that the electric field becomes weak and the connection to the source base station 400₁ is disconnected, or, when transmission of handover confirm command (Handover confirm) to the target base station 400₂ fails (HO failure) (step S616).

In such a case, after the connection with the source base station 400₁ is lost, the mobile station 500 autonomously launches handover error recovery procedure using cell search and the like. The mobile station 500 sends a handover request (HO request) to a base station having the best communication quality as a result of the cell search (step S618). For example, the mobile station 500 sends a handover request to the base station 400₂.

The handover request includes identification information such as an ID of the source base station 400₁ that disconnected the connection, RNTI (Radio Network Temporary Identifier) used in the source base station 400₁ and the like. The RNTI is a temporary identifier for identifying a user.

Next, after receiving the handover request, the base station 400₂ analyzes the address e.g. IP address of the source base station 400₁ from the ID e.g. cell ID of the source base station 400₁ included in the handover request to establish a (security) tunnel e.g. IPsec (Security Architecture for Internet Protocol) for transmitting context as necessary. By doing that, even when a security tunnel is not established with the source base station 400₁, a base station that receives the handover request can establish a security tunnel. Thus, the base station that receives the handover request can perform communication of data between the base station and the source base station 400₁ safely.

Next, when the base station 400₂ receives the handover request, the base station 400₂ sends a context transfer request to the source base station 400₁ (step S620).

Next, the source base station 400₁ copies context and user data for the mobile station 500 and sends them to the target base station 400₂ (step S622, step S624, step S626).

The target base station 400₂ receives the context transmitted from the source base station 400₁.

Next, the target base station 400₂ transmits, to the access gateway 300₁, a handover complete report (Handover Complete) for reporting that handover is completed in order to switch a path from the access gateway 300₁ set in the source base station 400₁ to the target base station 400₂ (step S628).

The access gateway 300₁ that receives the handover complete report reports, to the target base station 400₂, a handover complete acknowledgement (Handover Complete ACK) for reporting path switch complete (step S630).

The target base station 400₂ that receives the handover complete acknowledgement sends resource release message to the source base station 400₁ (step S632).

The source base station 400₁ that receives the resource release message discards the copied context (Delete context) (step S634).

As mentioned above, the source base station 400₁ copies original context, transfers the copy to the target base station 400₂, and discards the original context after receiving the resource release message from the target base station 400₂. By doing that procedure, since the original context can be held until receiving the resource release message from the target base station 400₂, even when the mobile station 500 moves into a tunnel so that handover does not complete successfully, for example, lossless handover can be realized.

Next, operation of the base station 400 in the radio access network 100 of the present embodiment is described.

In the present embodiment, operation is described for the source base station and the target base station.

The operation of the source base station is different from the operation of the source base station described with reference to Fig.4 in the process of step S406. In step S406, it is determined whether the resource release message is received from the target base station 400₂. When receiving the resource release message is received from the target base station 400₂, in step S408, the control unit 402 discards context, for example, discards control information necessary for setting U-plane stored in the C-plane storing unit 410 and user data stored in the data storing unit 408, wherein copies of the control information and the user data have been sent to the target base station 400₂.

The operation of the target base station is different from the operation of the source base station described with reference to Fig.5 in the process of step S508. In step S508, when determining that context is received from the source base station (step S506:Yes), the HO control unit 412 sends the resource release message to the source base station and sends the handover complete report to the access gateway.

As described above, in the present embodiment, even though handover fails for some reason, lossless handover can be realized by forwarding context from handover destination base station.

In addition, since the context can be held at the handover source base station until receiving the resource release message from the handover destination base station, lossless handover can be realized even though handover does not complete successfully when entering a tunnel.

The present international application claims priority based on Japanese patent application No.2006-57979, filed in the JPO on March 3, 2006 and the entire contents of the Japanese patent application No.2006-57979 is incorporated herein by reference.

### Industrial applicability

The base station and the handover control method of the present invention can be applied to a radio communication system.

## Claims

1. A base station comprising:
data storing means configured to store data addressed to a mobile station transmitted from a transfer route control apparatus;
data transfer means configured to transfer the data addressed to the mobile station to a handover destination base station according to a request of the data addressed to the mobile station from the handover destination base station,
wherein, when the base station receives a handover confirm complete report for reporting handover completion from the handover destination base station, the data storing means ends storing the data addressed to the mobile station.

2. The base station as claimed in claim 1, comprising:
data request means configured to request the data addressed to the mobile station from a handover source base station according to a handover request from the mobile station.

3. The base station as claimed in claim 2, wherein the data request means requests the data addressed to the mobile station from the handover source base station based on an ID indicating the handover source base station stored in the handover request and an identification identifying the mobile station used in the handover source base station.

4. The base station as claimed in claim 3, comprising:
handover destination base station analyzing means configured to obtain an address of the handover source base station from the ID indicating the handover source base station,
wherein the data request means requests the data addressed to the mobile station from the handover source base station using the address.

5. The base station as claimed in claim 1, comprising:
transfer route change request means configured to request the transfer route control apparatus to change a transfer router and transmits the handover confirm complete report to the handover source base station.

6. The base station as claimed in claim 1, wherein the data transfer means copies the data addressed to the mobile station to transfer the copied data addressed to the mobile station to the handover destination base station.

7. The base station as claimed in claim 1, wherein, when the base station does not receive the handover confirm complete report for a predetermined time, the data storing means discards the stored data addressed to the mobile station.

8. The base station as claimed in claim 1, wherein the handover confirm complete report is a resource release message transmitted from the handover destination base station.

9. A handover control method comprising:
a data storing step in which a handover source base station stores data addressed to a mobile station transmitted from a transfer route control apparatus;
a data transfer step in which the handover source base station transfers the data addressed to the mobile station to a handover destination base station according to a request of the data addressed to the mobile station by the handover destination base station;
a handover confirm complete report reception step in which the handover source base station receives, from the handover destination base station, a handover confirm complete report for reporting handover completion; and
a data storing end step in which the handover source base station ends storing the data addressed to the mobile station according to the reception of the handover confirm complete report.

10. The handover control method as claimed in claim 9, wherein the handover destination base station requests the data addressed to the mobile station from the handover source base station according to a handover request from the mobile station.

11. The handover control method as claimed in claim 9, comprising:
a transfer route change request step in which the handover destination base station requests the transfer route control apparatus to change a transfer route; and
a transfer route change request step in which the handover destination base station sends the handover confirm complete report to the handover source base station.

12. The handover control method as claimed in claim 9, wherein the data transfer step includes copying the data addressed to the mobile station, transferring the copied data addressed to the mobile station the handover destination base station.

13. The handover control method as claimed in claim 9, wherein the handover confirm complete report is a resource release message sent from the handover destination base station.
